Europäisches Patentamt

European Patent Office

Office européen des brevets

(11) Numéro de publication: **0 424 192 A1**

# DEMANDE DE BREVET EUROPEEN

(21) Numéro de dépôt: **90402608.5**

(51) Int. Cl.⁵: **A01D 90/08, A01D 90/12**

(22) Date de dépôt: **20.09.90**

(30) Priorité: 20.09.89 FR 8912328
01.03.90 FR 9002576

(43) Date de publication de la demande:
**24.04.91 Bulletin 91/17**

(84) Etats contractants désignés:
**DE ES FR IT**

(71) Demandeur: **ETABLISSEMENTS BUGNOT**
**Bettaincourt sur Rognon**

**F-52270 Doulaincourt Saucourt(FR)**

(72) Inventeur: **Bugnot, Michel**
**Bettaincourt Sur Rognon**
**F-52270 Doulaincourt Saucourt(FR)**

(74) Mandataire: **Robert, Jean-Pierre et al**
**CABINET BOETTCHER 23, rue la Boétie**
**F-75008 Paris(FR)**

(54) Dispofitif de transfert de balles cylindriques de fourrage depuis la presse vers une remorque.

(57) La dispositif, pour transférer une balle de la sortie de la presse (3) sur une remorque (6), comporte des moyens de préhension de chaque balle (1) comprenant un panier (9) de réception de la balle porté par la remorque (6), basculant autour d'un axe tansversal (10) et mobile le long de l'axe longitudinal de l'ensemble (3,6) attelé, entre une première position où il est situé a proximité de la machine (3) de confection des balles et une seconde position dans laquelle il est éloigné de la machine (3).

FIG.1

# DISPOSITIF DE TRANSFERT DE BALLES CYLINDRIQUES DE FOURRAGE DEPUIS UNE PRESSE VERS UNE REMORQUE

La présente invention concerne un dispositif de transfert des balles cylindriques de fourrage ou analogue produites par une machine de confection vers une remorque attelée à l'arrière de cette machine et qui comporte des moyens de traitement de chacune de ces balles.

La réalisation de grosses balles de foin ou de paille, cylindriques, connaît aujourd'hui un fort développement, en concurrence avec la confection de balles parallélépipèdiques. Des machines sont adaptées à la confection de telles balles à partir d'andains le long desquels on déplace la machine, chaque balle étant déposée derrière la machine. Ces balles sont donc dispersées, ce qui augmente considérablement le temps et la difficulté de leur ramassage, soit pour leur transport vers le lieu de leur stockage, soit pour leur mise sous enveloppe de matière plastique par banderollage.

Il a donc été envisagé des appareils que l'on peut atteler derrière la machine. de confection des balles cylindriques, qui possèdent des moyens de traitement de la balle (soit pour son groupage, les moyens étant alors une plate-forme de remorque, soit pour sa mise sous film de plastique, les moyens étant alors une machine à enrubanner montée sur un châssis tracté). Ces appareils possèdent en plus, à l'avant, des moyens de préhension et de manutention pour recueillir la balle déposée sur le sol par la presse. Ces moyens se présentent sous la forme soit d'un panier basculant, soit de pinces et ne donnent pas complètement satisfaction.

Le principal inconvénient tient au fait que la balle est à prendre alors qu'elle est en contact avec le sol ou avec la barre d'attelage. En effet, ce contact a des conséquences importantes sur le comportement de la balle au moment de sa prise en charge par les moyens de préhension. On indiquera par exemple que la barre d'attelage frotte sous la balle et l'endommage avant qu'elle ne soit prise en charge par le panier basculant. Cet endommagement conduit à des bourrages de foin ou de paille qui nuisent, à la longue, au bon fonctionnement du panier. La barre d'attelage peut également conduire à placer la balle en biais ce qui n'est pas favorable à sa prise par les moyens de préhension.

Lorsque le terrain est en pente, la balle tend à rouler derrière la machine et ne peut être reprise par le panier ou les pinces de préhension. En effet, ce panier ou ces pinces doivent nécessairement être assez éloignés de la partie arrière de la machine de confection des balles, car celle-ci comporte un capot arrière basculant, qui se soulève pour libérer la balle et qui, en position ouverte, interdit toute élévation de la balle par des moyens de préhension qui seraient rapprochés de la machine.

L'invention se propose d'améliorer les dispositifs existants qui sont destinés à être attelés derrière une presse à balles rondes, pour que le transfert de chaque balle vers ces dispositifs soit réalisé sans que la balle soit déposée sur le sol afin de supprimer les inconvénients ci-dessus.

A cet effet, elle a pour objet un dispositif de transfert des balles cylindriques de fourrage ou analogue, produites par une machine de confection, vers une remorque attelée à l'arrière de cette machine qui comporte des moyens de traitement de chacune de ces balles. Selon l'invention, ce dispositif comporte des moyens de préhension de chaque balle comprenant un panier de réception de la balle porté par la remorque, basculant autour d'un axe tansversal et mobile le long de l'axe longitudinal de l'ensemble attelé, entre une première position où il est situé à proximité de la machine de confection des balles et une seconde position dans laquelle il est éloigné de la machine.

Dans une première réalisation, le panier est monté basculant sur un support coulissant par rapport à la remorque.

Dans une seconde réalisation, le panier est monté basculant sur le châssis de la remorque tandis que la remorque est attelée à la machine par des moyens télescopiques.

Enfin, dans une dernière réalisation, le panier est formé par une partie fixe à l'avant de la remorque, cette remorque étant elle-même basculante autour d'un axe parallèle à celui de son essieu, tandis que la remorque est attelée à la machine par des moyens télescopiques.

Chacune de ces réalisations permet de prendre en charge la balle à la sortie de la presse avant qu'elle tombe sur le sol, puis en reculant le panier par rapport à la presse, d'autoriser la fermeture de la porte arrière de la presse et enfin le relevage du panier pour faire passer la balle vers l'arrière sur la remorque. Les deux premières réalisations peuvent concerner soit une remorque de groupage, soit une remorque équipée d'un dispositif à enrubanner les balles. Le troisième mode de réalisation est uniquement réservé à une remorque de groupage et dans ce cas le plateau comporte des moyens escamotables de retenue des balles, s'opposant à leur mouvement vers la presse lors du basculement vers l'avant du plateau.

D'autres avantages de l'invention apparaîtront au cours de la description des exemples de réalisation donnés ci-après. Il sera fait référence aux dessins annexés dans lesquels :

- la figure 1 est une vue en élévation d'une presse à laquelle est attelé un dispositif groupeur de balles selon l'invention, dans un premier mode de réalisation,
- la figure 2 est une vue de dessus de la figure 1,
- la figure 3 illustre par une vue en élévation une presse à laquelle est attelé un groupeur de balles selon un second mode de réalisation de l'invention, le groupeur étant en position rapprochée de la presse,
- la figure 4 et la figure 5 sont des vues en élévation d'autres réalisations du groupeur de balles selon l'invention,
- les figures 6 et 7 sont des vues en élévation de deux variantes de réalisation appliquées a un dispositif d'enrubannage des balles.

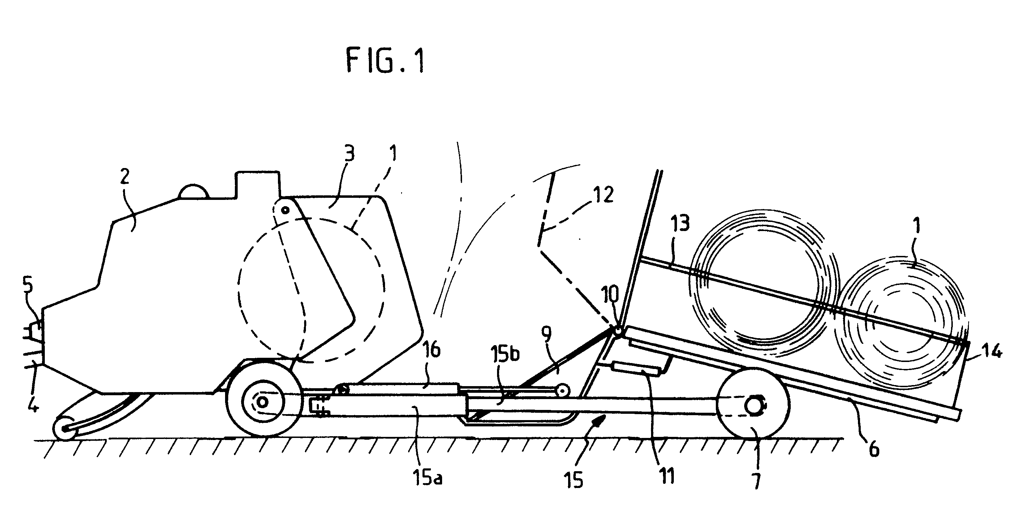

La presse représentée schématiquement aux figures 1 à 3 comporte, de manière connue, une chambre de formation de la balle cylindrique 1, délimitée par une enceinte comprenant une partie fixe 2 et un capot arrière 3 ouvrant pour décharger à l'arrière de la machine la balle confectionnée.

Cette presse est attelée à un tracteur agricole non représenté, au moyen d'une barre d'attelage 4 et un arbre d'entrée 5 est connecté a la prise de force de ce tracteur.

Le dispositif groupeur de balles comporte un châssis 6 équipé à sa partie médiane d'un essieu 7 et portant une plate-forme 8 de réception des balles. Le châssis est tel que la plate-forme est légèrement inclinée vers l'arrière de manière que les balles qu'elle supporte n'aient pas tendance à rouler vers l'avant même si le sol est légèrement en pente descendante. Sur l'avant de la plate-forme, la remorque comporte un panier 9, de largeur au moins égale à la longueur axiale d'une balle, articulé autour d'un axe 10 transversal. Grâce à des moyens de relevage 11 (vérin hydraulique), le panier peut être manoeuvré entre deux positions autour de l'axe d'articulation, l'une dans laquelle il est proche du sol, l'autre, représentée en traits mixtes 12, dans laquelle il est situé au-dessus du plan de la plate-forme 8 pour déverser la balle qu'il contient sur cette dernière et pour constituer une porte de fermeture avant du dispositif. A ce propos, on notera que la plate-forme comporte des barrières latérales 13 et une porte ou une barre transversale arrière 14 de maintien des balles. La porte ou barre arrière 14 est escamotable pour permettre le déchargement au sol des balles situées sur la plate-forme.

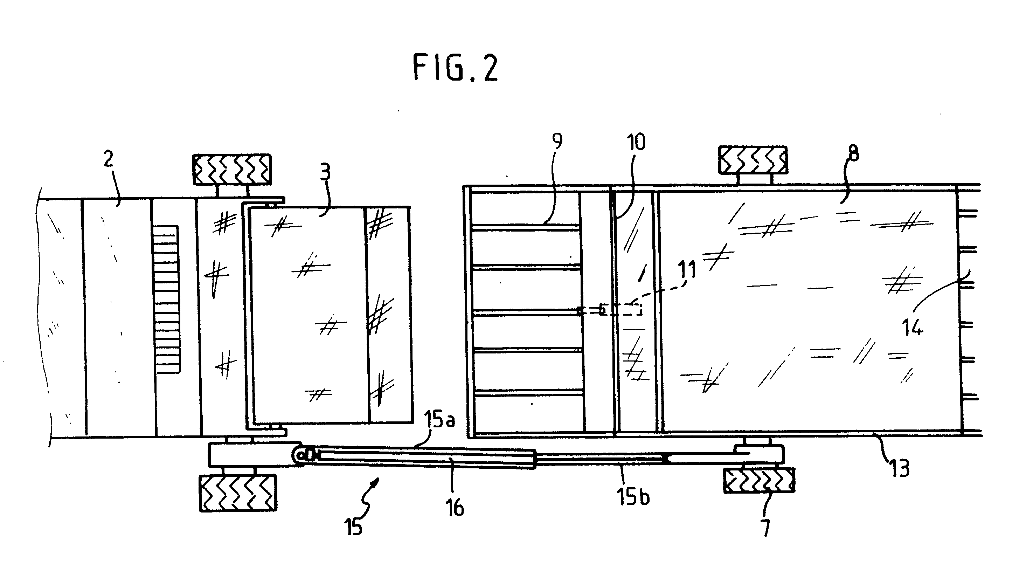

La remorque comporte également des moyens pour son attelage à l'arrière de la presse. Ces moyens sont constitués, dans la variante représentée aux figures 1 et 2, par une barre latérale 15 télescopique dont les extrémités sont attelées aux essieux de la presse et de la plate-forme. Cette barre latérale comporte un vérin 16 attelé entre les parties coulissantes 15a et 15b et dont la commande permet de faire varier la longueur de la barre, donc la distance séparant la presse du groupeur. Le groupeur peut donc être approché ou éloigné de la presse entre deux positions, l'une dans laquelle le panier 9, s'il est dans sa position basse, est situé à l'endroit du point de chute de la balle lorsque le capot 3 de la presse est ouvert, l'autre dans laquelle le panier chargé d'une balle est suffisamment éloigné de la presse pour que le capot 3 puisse se refermer et que la balle puisse être élevée sans heurter ce capot refermé.

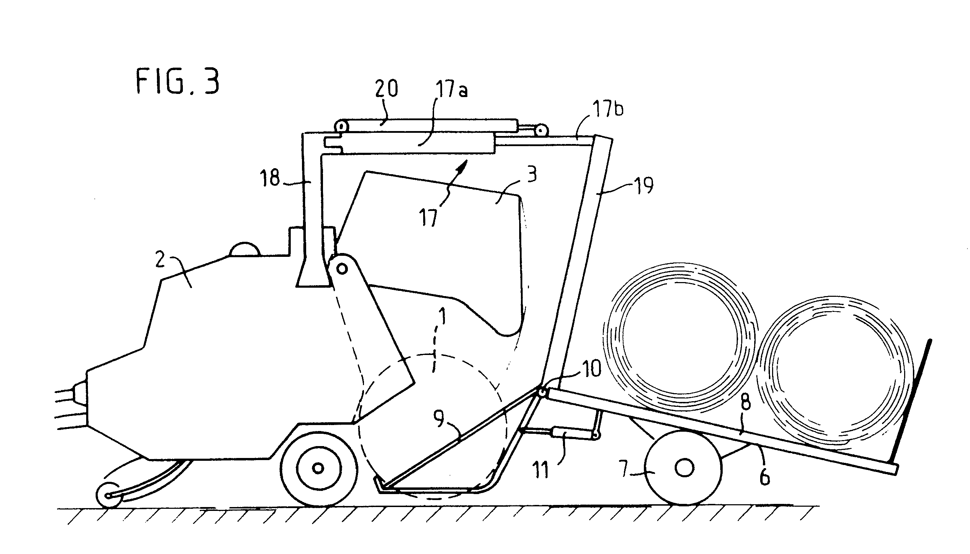

Dans la réalisation de l'invention représentée à la figure 3, les moyens d'attelage du dispositif à la presse comprennent une barre d'attelage 17 supérieure avec deux parties télescopiques 17a et 17b, et s'étendent entre une superstructure 18 rapportée sur la presse et une structure en forme de portique 19 solidaire du dispositif. La barre 17 s'étend ainsi dans l'axe longitudinal du dispositif (et de la presse) et comporte un vérin 20 pour commander sa variation de longueur. Elle est en outre suffisamment haute pour ne pas entraver l'ouverture du capot 3 et le relevage du panier 9 chargé. Les positions relatives du dispositif par rapport à la presse, obtenue par la commande du vérin 20, sont les mêmes que celles décrites précédemment.

Les raccordements des vérins 11, 16 et 20 à la source d'huile sous pression portée par le tracteur ne sont pas représentés. Il en est de même des vannes et organes de commande de ces vannes qui assurent la séquence des alimentations des vérins pour obtenir le fonctionnement décrit ci-après.

Le tracteur est conduit pour que la paille ou le fourrage andainé soit ramassé par la presse. Lorsqu'une balle cylindrique est achevée, de manière automatique par le biais de capteurs adéquats, ou manuellement, le dispositif groupeur est rapproché de l'arrière de la presse, le panier 9 dans sa position proche du sol. Il se trouve alors dans la position de la figure 3. L'ouverture du capot 3 est. commandée et la balle achevée tombe à l'arrière de la machine dans le panier 9. On commande ensuite par les vérins 16 ou 20, l'éloignement de la remorque (on rappellera que le tracteur poursuit son trajet sans s'arrêter) de manière à pouvoir refermer le capot 3, puisque la balle est dans le panier éloigné de l'arrière de la presse et ne fait plus obstacle à cette fermeture.

Dans cette position éloignée, on commande le relevage du panier 9 au moyen du vérin 11 et la balle se déverse sur la plate-forme. l'a remorque reste alors dans cette position jusqu'à l'achèvement de la confection de la balle suivante par la presse qui, détecté, permet de commander l'abaissement du panier et le rapprochement de la remorque.

Lorsque la plate-forme est remplie, on ouvre la porte arrière 14 pour décharger sur le sol les balles qu'elle supporte qui sont ainsi groupées en un seul endroit. Ce groupage facilite leur reprise pour leur évacuation, par tout moyen de manutention et de transport adapté.

La prise en charge directe de la balle par le panier 9 à sa sortie de la presse et l'absence de timon d'attelage qui est un obstacle au bon déroulement du groupage, permet de supprimer les aléas de fonctionnement des groupeurs connus et de travailler sur des terrains plus difficiles et notamment plus pentus.

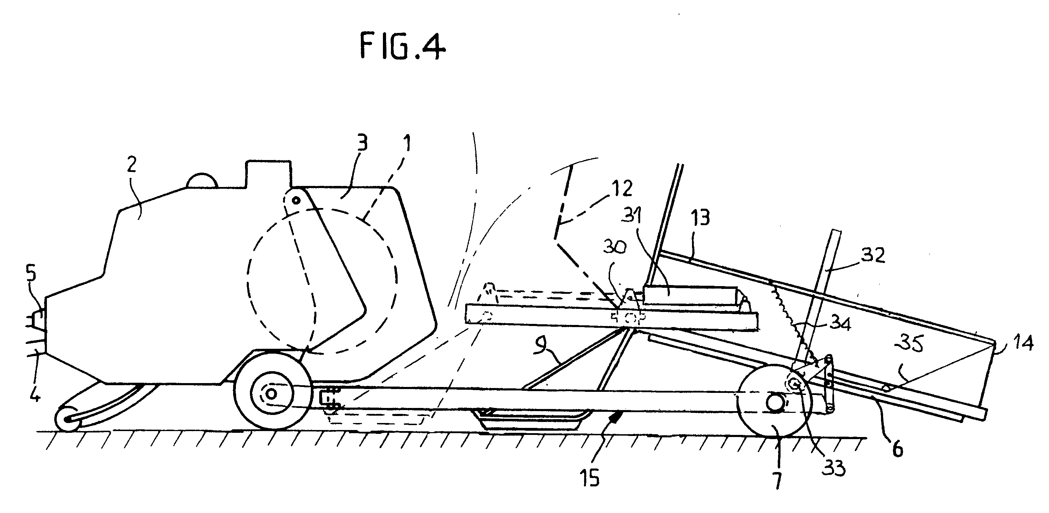

La variante de réalisation de la figure 4 diffère des figures 1 et 2 sous deux aspects. Le panier 9 est ici articulé en basculement sur un support 30 qui peut coulisser horizontalement par rapport au châssis 6 de la remorque. Un vérin 31 permet d'assurer à la fois le déplacement avant et arrière du panier 9 entre les positions basses marquées respectivement en trait plein et mixte et, en position arrière, son basculement vers le haut (position 12 sur la figure) pour déverser la balle sur le plateau de la remorque. Cette réalisation présente l'avantage par rapport à celle des figures 1 et 2 d'être plus simple car l'attelage entre la presse et la remorque n'a plus à être télescopique et un seul vérin permet d'assurer tous les déplacements du panier.

Cette variante fait également apparaître, dans la partie médiane de la remorque un cloisonnement intermédiaire 32 qui se présente sous la forme d'une porte ou d'une barrière basculante autour d'un axe transversal inférieur 33 et rappelée dans sa position perpendiculaire au plateau par un ressort 34. La fonction de cette porte est de retenir la première balle déversée sur la remorque en avant de celle-ci afin qu'elle ne roule pas jusqu'à la barrière arrière 14 qu'elle heurterait trop violemment. Au moment du chargement de la seconde balle, les portes 14 et 32 sont libérées par un mécanisme approprié (par exemple un câble 35) commandé par le conducteur du tracteur ou automatiquement.

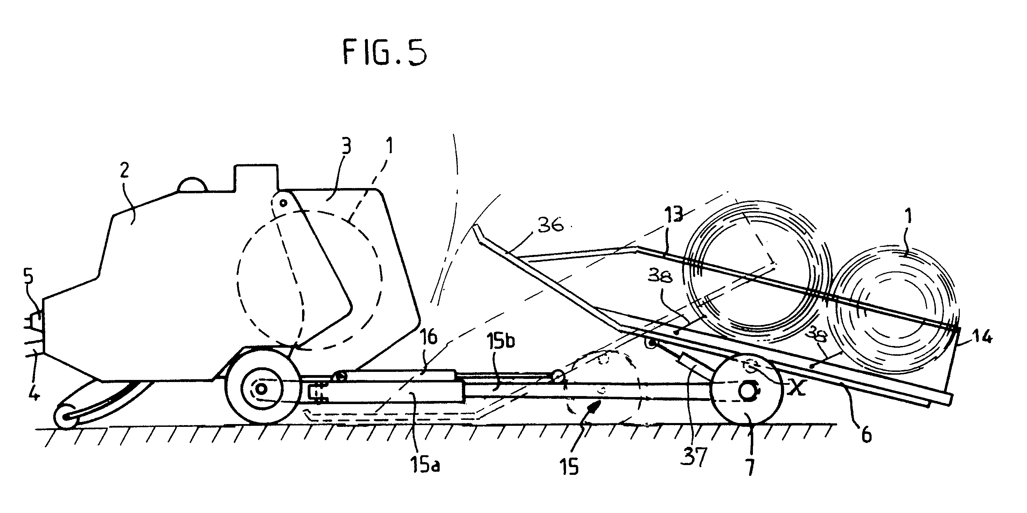

La figure 5 illustre une variante de réalisation dans laquelle la partie avant 36 de la remorque fait office de panier. La remorque est montée oscillante autour d'un axe X parallèle à celui de son essieu 7. Le basculement est commandé par un vérin 37 entre une position où la partie 36 est au voisinage du sol (comme représenté en traits interrompus sur la figure) et une position relevée dont l'inclinaison par rapport à la verticale peut être maintenue constante par un asservissement approprié, quelle que soit la pente du sol. Dans ce cas, l'attelage 15 entre machine et remorque reste télescopique. On notera la présence de moyens de retenue 38 des balles constitués, par exemple, par des cales escamotables dans la plate-forme au passage des balles de l'avant vers l'arrière, et qui viennent se ficher dans les balles pour empêcher le mouvement contraire lorsque la remorque est inclinée vers l'avant

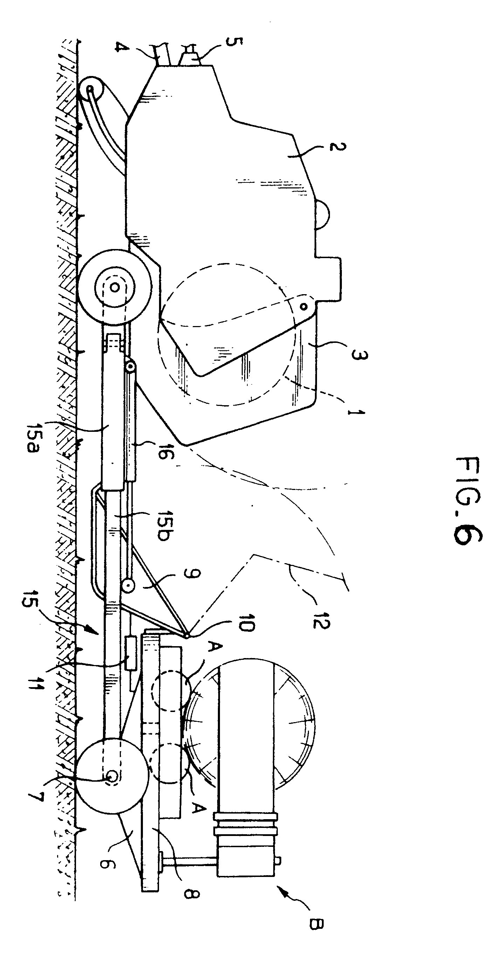

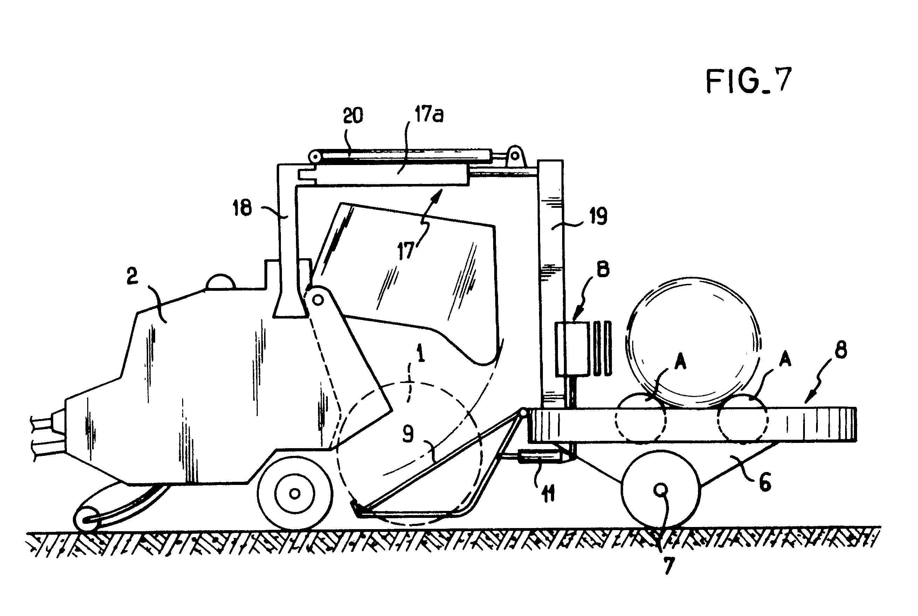

Aux figures 6 et 7, on retrouve la plupart des éléments déjà décrits avec les mêmes références. La plate-forme 8 de la remorque est ici équipée d'un dispositif à emballer par enrubannage les balles de fourrage. Ce dispositif est connu en lui-même et comporte des rouleaux A pour faire tourner la balle autour de son axe et des moyens B pour délivrer un film à banderoller. Le dispositif B peut être stationnaire et les rouleaux A tournent dans le plan de la plate-forme, ou bien ces rouleaux sont fixes et le dispositif B est un bras tournant. La plate-forme 8 peut être basculable par rapport au châssis 6 pour évacuer vers l'arrière la balle enveloppée. De même que dans les cas précédents, l'emballage d'une balle est réalisé alors que le tracteur continue de circuler et qu'une balle est entrain d'être pressée. On parvient ainsi à ensiler sous film plastique les balles dès leur confection ce qui est une garantie de la qualité du produit ensilé.

**Revendications**

1 - Dispositif de transfert des balles (1) cylindriques de fourrage ou analogue, produites par une machine (3) de confection, vers une remorque (6) attelée à l'arrière de cette machine qui comporte des moyens de traitement de chacune de ces balles, caractérisé en ce qu'il comporte des moyens de préhension de chaque balle (1) comprenant un panier (9) de réception de la balle porté par la remorque (6), basculant autour d'un axe tansversal (10) et mobile le long de l'axe longitudinal de l'ensemble (3,6) attelé, entre une première position où il est situé à proximité de la machine (3) de confection des balles et une seconde position dans laquelle il est éloigné de la machine (3).

2 - Dispositif selon la revendication 1, caractérisé en ce que le panier (9) est monté basculant sur un support (30) coulissant par rapport à la remorque (6).

3 - Dispositif selon la revendication 1, caractérisé en ce que le panier (9) est monté basculant sur le châssis (6) de la remorque et en ce que la remorque est attelée à la machine par des moyens (15) télescopiques.

4 - Dispositif selon la revendication 1, caractérisé en ce que le panier est formé par une partie (36) fixe à l'avant de la remorque (6), cette remorque étant elle-même basculante autour d'un axe (X) parallèlé à celui de son essieu (7), et en ce que la remorque est attelée à la machine par des moyens (15) télescopiques.

5 - Dispositif selon l'une quelconque des revendications précédentes, caractérisé en ce que les moyens (15) d'attelage de la remorque (6) à la machine (3) sont situés à l'extérieur du volume balayé par la balle (1) dans son déplacement depuis la machine (3) jusqu'aux moyens (8,A,B) de traitement portés par la remorque (6).

6 - Dispositif selon la revendication 5, caratérisé en ce que les moyens d'attelage (15) sont disposés latéralement entre la machine (3) et la remorque (6).

7 - Dispositif selon la revendication 5, caractérisé en ce que les moyens d'attelage (17) sont disposés dans l'axe longitudinal de l'ensemble (3,6) attelé, entre une structure (18) supérieure solidaire de la machine (3) et la traverse supérieure d'une structure (19) en forme de portique solidaire de la partie avant du châssis (6) de la remorque.

8 - Dispositif selon l'une quelconque des revendications précédentes, caractérisé en ce que la remorque est une remorque de groupage des balles qui comporte au moins un cloisonnement (32) intermédiaire escomotable pour l'arrêt de la première balle (1).

9 - Dispositif selon l'une des revendications 4 à 7 caractérisé en ce que la remorque est une remorque de groupage de balles de balles dont le plateau (8) comporte des moyens escamotables (38) de retenue des balles s'opposant à leur mouvement vers la machine (3) lors de l'abaissement de l'avant du plateau (8).

10 - Dispositif selon l'une quelconque des revendications 1 à 7 caractérisé en ce que la remorque est équipée de moyens (A,B) d'enrubannage des balles.

# FIG.1

EP 0 424 192 A1

FIG.2

EP 0 424 192 A1

FIG. 3

# FIG.4

EP 0 424 192 A1

FIG.5

FIG.6

FIG. 7

EP 0 424 192 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | EP-A-110110 (DARIO MANULI)<br>* page 5, ligne 27 - page 8, ligne 24; figures 1, 2, 4 *<br>--- | 1, 3, 4, 9, 10 | A01D90/08<br>A01D90/12 |
| Y | EP-A-110056 (BUSATIS-WERKE)<br>* page 8, alinéa 1 - page 12, dernier alinéa; figures 1-7 *<br>--- | 1, 3, 4, 9, 10 | |
| A | EP-A-284984 (AGROZET KONCERN)<br>* colonne 3, ligne 16 - colonne 5, ligne 35; figure 1 *<br>--- | 1, 4 | |
| A | US-A-4204790 (BAXTER)<br>* colonne 5, lignes 35 - 63; figure 2 *<br>----- | 7 | |

| | DOMAINES TECHNIQUES RECHERCHES (Int. Cl.5 ) |
|---|---|
| | A01D<br>A01F |

Le présent rapport a été établi pour toutes les revendications

| Lieu de la recherche | Date d'achèvement de la recherche | Examinateur |
|---|---|---|
| LA HAYE | 28 JANVIER 1991 | HERYGERS J.J. |